# EUROPEAN PATENT APPLICATION

(11) **EP 3 549 828 A1**
(43) Date of publication of application: **09.10.2019**
(21) Application number: 18465511.6
(22) Date of filing: 03.04.2018
(51) Int. Cl.: B60R 21/0136, B60N 2/42, B60N 2/427, B60N 2/00

(54) **VEHICLE WITH A RETRACTABLE SEAT AND METHOD FOR OPERATING A RETRACTABLE SEAT**

(71) Applicant: Continental Automotive GmbH, 30165 Hannover (DE)
(72) Inventor: Bivolaru, Valentin, 300685 Timisoara (RO)
(74) Representative: Büchner, Jörg

(57) **Abstract**

The invention relates to a vehicle (1) with a roof (2), comprising at least one seat (3, 3', 3") retractable from a regular position (P1) into a retracted position (P2) with an enlarged headroom (S2) between the seat (3, 3', 3") and the roof (2). The vehicle (1) comprises at least one roof impact sensor (4, 5) configured to detect an impact of an obstacle (7, 7', 7") on the roof (2). The vehicle (1) further comprises a control unit (6) connected with the at least one roof impact sensor (4, 5) and with the at least one seat (3, 3', 3"). The control unit (6) is configured to retract the at least one seat (3, 3', 3") into a retracted position (P2) when the at least one roof impact sensor (4, 5) detects the impact of an obstacle (7, 7', 7") onto the roof (2).

The invention further relates to a method for operating a retractable seat (3, 3', 3") in a vehicle (1).

## Description

For the protection of passengers in a car, rollover detection systems are known that detect a rollover of a car and subsequently initiate protective measures such as an ignition of airbags, in particularity curtain airbags. Such rollover detection systems prevent injuries of persons inside the car in situations where the car's roof or the mechanical support thereof is damaged as a consequence of a rollover.

Furthermore, pressure based pedestrian protection systems (pPPS) are known from the state of the art. Pedestrian protection system comprise a sensor that consists of a flexible air tube that is laid across the entire width of the car in its front bumper. The tube is situated directly behind the foam block that is fitted at the front of the vehicle to absorb impact energy. Standardized pressure sensors are installed at either end of the air-filled pressure tube.

When a vehicle collides with an obstacle, the resulting pressure exerted on the tube through the front bumper and foam block creates a typical waveform that is detected by the two sensors at the ends of the tube and forwarded to an airbag control unit. A pedestrian protection algorithm implemented in a controller of the pPPS enables the type of collision to be rapidly identified. The signal propagation time also allows conclusions to be drawn about the location of the impact, for example the front right-hand corner or the middle of the vehicle. Within 10-15 milliseconds of an impact, the active hood of the vehicle is triggered and raised by special actuators. This reduces the risk of death or severe injury to the pedestrian from hitting the hood and underlying engine block.

A vehicle's roof may collapse in case of accidents caused by falling obstacles such as falling branches in case of a storm, falling stones in mountain areas in case of a rockfall or other obstacles such as bill boards or traffic lights. Also, a vehicle may, in a traffic accident, collide with a light pillar or a tree, which subsequently may fall onto the roof of the vehicle.

The collapse of a vehicle's roof may cause severe injuries, for example head or neck injuries, for persons inside the vehicle.

Such a collapse of a vehicle's roof is not detected, and therefore such injuries are not prevented, by protection systems known from the state of the art such as rollover detection systems or pedestrian protection systems. Also, methods to protect passengers in a rollover situation may be less apt for a roof collapse in an upright position.

Therefore, protection systems that protect passengers inside the vehicle against injuries resulting from a collapse of a vehicle's roof are needed that provide a better protection for the passengers inside the vehicle after a roof collapse in an upright position of the car.

It is an object of the present invention to provide a vehicle with a seat configured to protect a passenger occupying the seat in an accident where the roof of the vehicle is at least partially collapsed by the impact of an obstacle. This object is achieved by a seat according to claim 1.

It is a further object of the present invention to provide a method for operating such a seat. This object is achieved by a method according to claim 7.

According to the invention, a vehicle comprises at least one roof impact sensor and at least one seat that is retractable from a regular position with a regular headroom between the seat and the roof of the vehicle into a retracted position with an enlarged headroom between the seat and the roof. In particularity, the headroom in the retracted positions exceeds the headroom in the regular position.

The at least one roof impact sensor is configured to detect an impact of an obstacle onto the roof.

According to the invention, the vehicle further comprises a control unit connected with the at least one roof impact sensor and with the at least one seat. The control unit is configured to retract the at least one seat into a retracted position when the at least one roof impact sensor detects the impact of an obstacle onto the roof.

Thereby, a passenger seating in the seat is protected from injuries that could otherwise result from a collision of the passenger with the collapsing roof of the vehicle or a part thereof. In particularity, a passenger is protected also in situations where the collapse of the vehicle's roof is not caused by a rollover of the vehicle. Thus, the safety of the vehicle is improved.

In an embodiment, the roof impact sensor may comprise a hermetically tight, compressible pressure tube and with at least one pressure sensor. The at least one pressure sensor is configured to measure a pressure inside the pressure tube. The at least one pressure tube is at least partially arranged in an support structure supporting an impact sensing area of the roof of the vehicle, such that the impact of an obstacle within the impact sensing area at least partially compresses the pressure tube.

If an obstacle impacts the impact sensing area of the vehicle's roof, the mechanical support structure is damaged and the pressure tube is at least partially compressed. Thereby, a pressure pulse is generated inside the pressure tube. The pressure pulse is registered by the at least one pressure sensor.

By evaluating the pressure value read by the at least one pressure sensor, the impact of the obstacle can be detected independently from a rollover situation. Protective measures can thus be initiated that prevent persons inside the vehicle from injuries as a consequence of an obstacle, such as a tree or a traffic sign, falling upon the vehicle.

The roof impact sensor may be formed as a front-side roof impact sensor, wherein the pressure tube is arranged along the supporting structure of the front-side part of the roof, thereby embracing the roof above a driver seat 3 and a front passenger seat. With such an embodiment it is possible to efficiently protect a driver and a front passenger from injuries caused by falling obstacles.

When the vehicle is formed as a passenger car comprising at least one rear passenger seat, it may comprise a rear-side roof impact sensor with a pressure tube arranged along the supporting structure of the rear-side part of the roof, thereby embracing the roof above the rear passenger seats. With such an embodiment it is possible to efficiently detect a collapse of a roof portion covering the rear passenger seats caused by falling obstacles.

The vehicle may be formed as a passenger car and comprise a front-side roof impact sensor and a rear-side roof impact sensor. With such an embodiment, it is possible to detect the location and the severity of an impact more precisely and more comprehensively. It is thus possible to initiate a protective measure that is better adapted to the impact and that spares protective systems that are not needed to prevent injuries.

A pressure sensor may be arranged at each end of a pressure tube. This embodiment is particularly easy to design and manufacture, as pre-configured tubes can be trimmed to form pressure tubes of various lengths. As an example, the ends of a pressure tube with a pressure sensor mounted on each end can be integrated into pillows that form the supporting structure of the vehicle, while the central part of the pressure tube is led along the edge of the roof.

The vehicle may further comprise a control unit connected with the at least one pressure sensor and configured to detect an impact of an obstacle on at least one impact sensing area. The control unit enables more adapted protective measures as it is possible to more precisely evaluate the location and severity of an impact.

In an embodiment, a seat comprises a seating and a back rest. The seating is configured to be lowered when the seat is moved from the regular position into the retracted position and/or a back rest is configured to be inclined more horizontally when the seat is moved from the regular position into the retracted position. Thereby, the head room between the seat and the roof is enlarged, thus protecting the passenger in the seat.

In an embodiment a seat comprises an occupancy detector connected with the control unit and configured to detect if the seat is occupied. Then, the seat can be retracted only if it is occupied by a passenger. Unnecessary or even dangerous movements of a seat can thus be avoided.

In an embodiment, a roof impact sensor comprises a hermetically tight, compressible pressure tube and at least one pressure sensor configured to measure a pressure inside the pressure tube, wherein the at least one pressure tube is arranged in a support structure supporting an impact sensing area of the roof of the vehicle such that the impact of an obstacle within the impact sensing area at least partially compresses the pressure tube. Such a roof impact sensor is particularly easy to manufacture.

In an embodiment, a plurality of roof impact sensors are arranged such that a first roof impact sensor detects an impact of an obstacle within an impact sensing area that is at least partially non-overlapping the impact sensing area of a further roof impact sensor. With such an embodiment it is possible to localise the impact of an obstacle and to retract only those seats that are potentially affected by a collapse of the roof caused by the impacting obstacle.

In an embodiment, a front-side roof impact sensor comprises a pressure tube arranged along the supporting structure of the front-side part of the roof, thereby embracing the roof above a driver seat and/or a front passenger seat. Furthermore, a rear-side roof impact sensor comprises a pressure tube arranged along the supporting structure of the rear-side part of the roof, thereby embracing the roof above the at least one rear passenger seat. As an advantage, the severity and the location of an impact can be detected more precisely, and the retraction of seats can be better adapted.

For example, only the driver seat and a front passenger seat are retracted if just the front-side roof impact sensor detects an impact.

In a method for operating the control unit connected with the pressure sensors, the control unit compares each pressure value sensed by a pressure sensor against a threshold value and wherein the control unit initiates a protective measure when a pre-determined number of pressure values reach a threshold value.

As an example, such a method may initiate a first protective measure when a single pressure value exceeds a first threshold, thereby indicating a major impact of an obstacle. Such a method may alternatively initiate a modified second protective measure when a certain number of pressure values exceeds a second threshold lower than the first threshold.

Such a method may be configured such that the modified second protective measure is initiated when four pressure sensor values exceed the lower second threshold, but is not initiated when only three pressure sensor values exceed the lower second threshold. Thus, a more adapted protective measure is enabled by such a method.

In an embodiment of said method, the first and/or second threshold values are chosen specifically for each pressure sensor. As an example, the first threshold value for initiating a first protective measure of a pressure sensor nearby the driver seat may be chosen different from the first threshold value of a pressure sensor nearby a rear passenger seat.

In an embodiment of said method, a protective measure comprises the tensioning of at least one seat belt and/or the ignition of at least one curtain airbag and/or the adjustment of at least one seat into a protective retracted position. It is possible to choose a protective measure relating to a seat in dependence on the occupancy of the respective seat.

In an embodiment of such a method, the occupancy of at least one seat is detected and a protective measure related to a seat is configured depending on the detected occupancy of this seat. Thereby, unnecessary protective measures or protective measures that potentially pose a risk to persons in the vehicle can be avoided.

In a method for operating a retractable seat of a vehicle, according to the invention an impact of an obstacle onto the roof of the vehicle is detected and, upon such detection, the seat is moved from its regular position into its retracted position. Thereby, a passenger seating in the seat is provided with an enlarged headroom and protected from injuries that otherwise could be caused by a collapsing roof of the vehicle.

In an embodiment of such a method, the seating of a seat is lowered and/or the back rest of a seat is inclined towards a more horizontal inclination when the seat is moved from its regular position towards its retracted position. Thereby, a passenger seating in the seat is provided with an enlarged headroom and protected from injuries that otherwise could be caused by a collapsing roof of the vehicle.

In an embodiment of such a method, the occupancy of a seat is determined beforehand it is moved towards its retracted position. The seat is moved into the retracted position only if it is occupied. Thereby, a retraction of a seat is avoided that does not provide protection to a passenger but instead might pose a risk to other persons in the vehicle.

In an embodiment of such a method, the impact of the obstacle onto the roof is localised. A seat is moved into the retracted position only if it is potentially affected by the impact. Thereby, a retraction of a seat is avoided that does not provide protection to a passenger but instead might pose a risk to other persons in the vehicle.

The present invention will become more fully understood from the detailed description given hereinbelow and the accompanying drawings which are given by way of illustration only, and thus, are not limitive of the present invention, and wherein:
- Figure 1: is a schematic perspective view on a vehicle,
- Figure 2: is a schematic topview on a vehicle roof,
- Figure 3: is a schematic topview on a vehicle roof with an impacted medium-size obstacle,
- Figure 4: is a schematic topview on a vehicle roof with an impacted large-size obstacle and
- Figure 5: is a schematic side view on a vehicle seat.

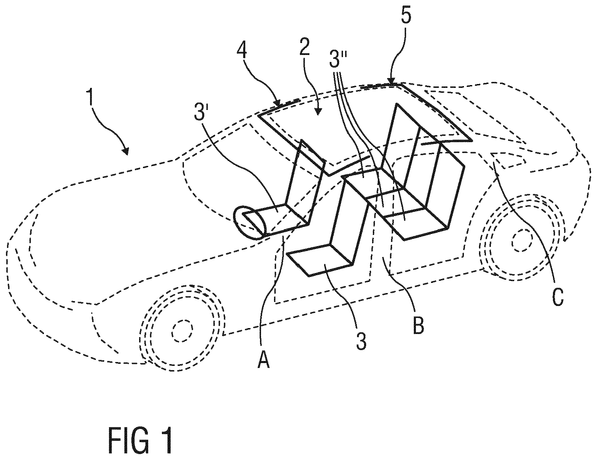

Figure 1 is a schematic view on a vehicle 1 comprising a vehicle roof 2 and a driver seat 3, a front passenger seat 3' and plurality of rear passenger seats 3". A front-side roof impact sensor 4 and a rear-side roof impact sensor 5 are integrated into the vehicle roof 2. The roof 2 is supported by a front-side A-pillar A, by a rear-side C-pillar C and by a B-pillar B in between the A-pillar A and the C-pillar C.

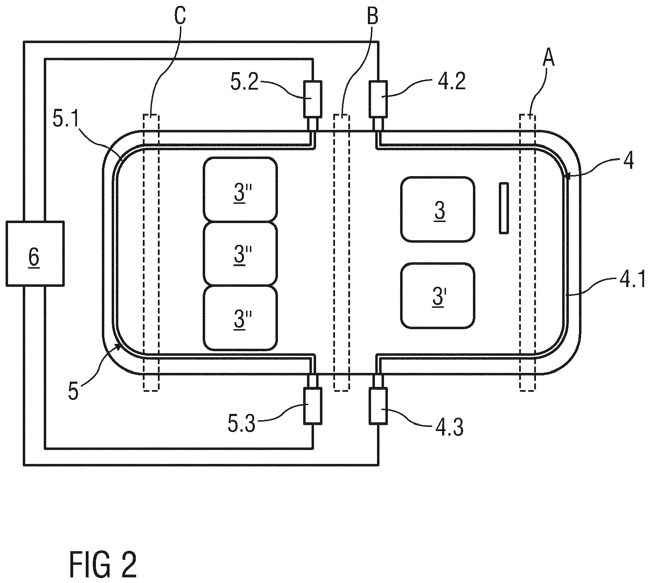

As shown in more detail in figure 2, the front-side roof impact sensor 4 is arranged along the edges of the front-side part of the roof 2 and the A-pillar A, thereby embracing the roof 2 above the driver seat 3 and the front passenger seat 3'. Approximately mirrored at the B-pillar B, the rear-side roof impact sensor 5 is arranged along the edges of the rear-side part of the roof 2 and the C-pillar C, thereby embracing the roof 2 above the rear passenger seats 3" .

In an embodiment, a pressure sensor 4.2, 4.3, 5.2, 5.3 is arranged in either of the pillars A, B, C. As an example, the pressure sensors 4.2, 4.3, 5.2, 5.3 may be arranged inside the B-pillar B.

Each of the roof impact sensors 4, 5 comprises a pressure tube 4.1, 5.1. Each pressure tube 4.1, 5.1 pneumatically connects pressure sensors 4.2, 4.3 and 5.2, 5.3, respectively, with one pressure sensor 4.2, 4.3, 5.2, 5.3 arranged on each end of the pressure tubes 4.1, 5.1.

The pressure tubes 4.1, 5.1 are gas-filled and hermetically tight with a deformable tubular outer support structure. Such pressure tubes 4.1, 5.1 are known from Pedestrian Protection Systems.

According to the invention, the pressure tubes 4.1, 5.1 of the roof impact sensors 4, 5 are arranged on the vehicle roof 2. An impact upon the roof 2 will thus, at least in part, compress the deformable outer support structure of at least one of the pressure tubes 4.1, 5.1, thereby creating a pressure pulse that is detected by at least one of the pressure sensors 4.2, 4.3, 5.2, 5.3 arranged at the ends of the impacted pressure tubes 4.1, 4.2.

The signals of the pressure sensors 4.2, 4.3, 5.2, 5.3 are received and evaluated by a control unit 6. An abrupt pressure pulse detected by one or more pressure sensors 4.2, 4.3, 5.2, 5.3 can thus be recognized by the control unit 6 as an impact on the roof 2 of the car 1. Depending on the magnitude, the spatial distribution of the at least one detected pressure pulses and/or the lag between a plurality of pressure pulses, the control unit 6 initiates protective measures such as lowering one or more seats 3, 3', 3", which will be described in more detail later on.

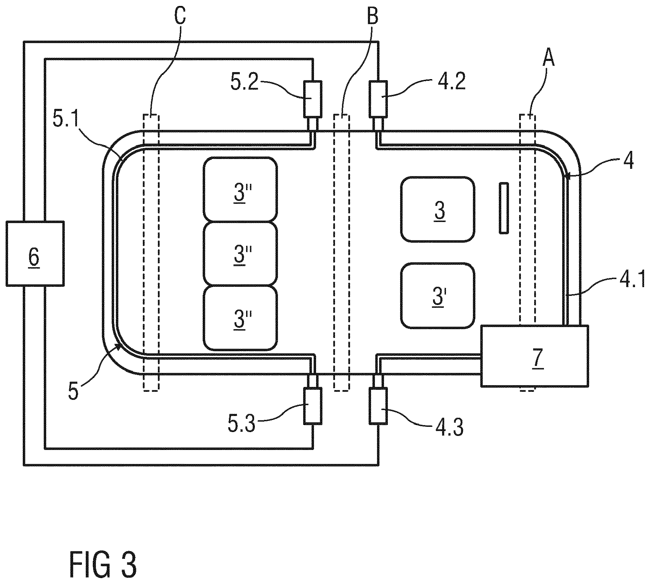

Figure 3 schematically illustrates a situation following an impact of an obstacle 7 of small or medium size footprint such as a smaller stone, a branch or a metal part upon the roof 2 nearby the front passenger seat 3'. The impact affects the front-side roof impact sensor 4 with a larger pressure pulse detected at the pressure sensor 4.3 at the near end of the pressure tube 4.1 and a smaller and more delayed pressure pulse detected at the far end of the pressure tube 4.1. The rear-side roof impact sensor 5 is not affected by the impact.

In the situation as illustrated by Figure 3, the control unit 6 receives a large pressure pulse signal from the pressure sensor 4.3 nearby the front passenger seat 3', a comparatively low and delayed pressure pulse signal from the pressure sensor 4.2 nearby the driver seat 3 and no pressure pulse signal from the pressure sensors 5.2, 5.3 of the rear-side roof impact sensor 5.

The control unit 6 is configured such that the impact of the obstacle 7 is classified as of minor or moderate concern. As an example, the control unit 6 can compare the pressure pulse signals against a pre-determined threshold value. If just one of the pressure pulse signals exceeds the threshold value, a moderate concern impact is classified. In a similar way, a more precise classification is possible by comparing pressure pulse signals against a plurality of pre-determined threshold values, wherein a threshold value may specifically be determined for a specific position of a pressure sensor 4.2, 4.3, 5.2, 5.3.

The control unit 6 is further configured such that no protective measures are initiated in a situation of minor or moderate concern. Alternatively, the control unit 6 may be configured such that limited protective measures are initiated in a situation of moderate concern, e.g. protective measures that protect a single seat 3' closest to the detected impact of the obstacle 7.

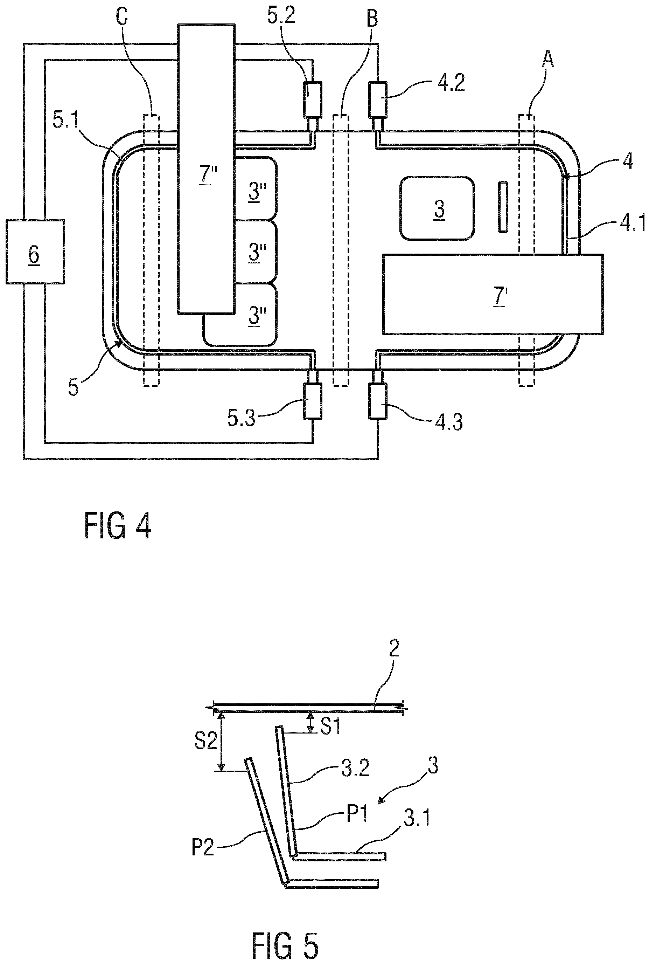

Figure 4 schematically illustrates a situation following an impact of obstacles 7', 7" with an extended footprint. As more extended obstacles 7', 7" deform either or both of the pressure tubes 4.1, 5.1 along a greater length, pressure pulses of higher amplitude are recognised at a plurality of pressure sensors 4.2, 4.3, 5.2, 5.3.

The control unit 6 is configured such that such a situation is classified as a critical or major concern impact, wherein protective measures are initiated for at least one of the seats 3, 3', 3". The control unit 6 may be configured such that different protective measures are initiated for different seats 3, 3', 3" depending on the distribution of the amplitudes of pressure pulses at all pressure sensors 4.2, 4.3, 5.2, 5.3 and depending on further sensor systems.

As an example, seat belts may be fastened for all seats 3, 3', 3" and all curtain airbags may be ignited, but a seat 3, 3', 3" may be retracted only when a passenger is detected that occupies the seat 3, 3', 3" and when a pressure pulse exceeding a pre-determined critical threshold is registered by a pressure sensor 4.2, 4.3, 5.2, 5.3 nearby the respective seat 3, 3', 3".

Figure 5 illustrates the retreat of a seat 3 in more detail. The seat 3 comprises a seating 3.1 and a back rest 3.2. In a regular position P1, the seat 3, 3', 3" provides comfort and overview to the passenger or driver occupying the seat 3, 3', 3". In the regular position P1, a regular headroom S1 is provided between the upper end of the backrest or headrest of the seat 3, 3', 3" and the inner face of the roof 2. In the regular position P1 the back rest 3.2 is in a substantially upright position.

When a critical impact of a major-size obstacle on the roof 2 is detected by the control unit 6, the seat 3, 3', 3" is retracted into a retracted position P2. In particularity, the seating 3.1 is lowered and the back rest 3.2 is inclined towards a more horizontal inclination.

Thereby, an enlarged headroom S2 is provided between the upper end of the backrest or headrest of the seat 3, 3', 3" and the inner face of the roof 2. Thus, the risk of potential injuries of the passenger on the seat 3, 3', 3" is reduced.

### Reference list

- 1: vehicle
- 2: roof
- 3: driver seat, seat
- 3.1: seating
- 3.2: back rest
- 3': front passenger seat, seat
- 3": rear passenger seat, seat
- 4: roof impact sensor
- 4.1: pressure tube
- 4.2, 4.3: pressure sensor
- 5: roof impact sensor
- 5.1: pressure tube
- 5.2, 5.3: pressure sensor
- 6: control unit
- 7, 7', 7": obstacle
- A: A-pillar
- B: B-pillar
- C: C-pillar
- P1: regular position
- P2: retracted position
- S1: regular headroom
- S2: enlarged headroom

## Claims

1. Vehicle (1) with a roof (2), comprising at least one seat (3, 3', 3") retractable from a regular position (P1) with a regular headroom (S1) between the seat (3, 3', 3") and the roof (2) into a retracted position (P2) with an enlarged headroom (S2) between the seat (3, 3', 3") and the roof (2),
**characterised in that** the vehicle (1) comprises at least one roof impact sensor (4, 5) configured to detect an impact of an obstacle (7, 7', 7") onto the roof (2) and further comprises a control unit (6) connected with the at least one roof impact sensor (4, 5) and with the at least one seat (3, 3', 3"), wherein the control unit (6) is configured to retract the at least one seat (3, 3', 3") into a retracted position (P2) when the at least one roof impact sensor (4, 5) detects the impact of an obstacle (7, 7', 7") onto the roof (2).

2. Vehicle (1) according to claim 1,
**characterised in that** a seat (3) comprises a seating (3.1) configured to be lowered when the seat (3) is moved from the regular position (P1) into the retracted position (P2) and/or a back rest (3.2) configured to be inclined more horizontally when the seat (3) is moved from the regular position (P1) into the retracted position (P2).

3. Vehicle (1) according to claim 1 or 2,
**characterised in that** a seat (3, 3', 3") comprises an occupancy detector connected with the control unit (6) and configured to detect if the seat (3, 3', 3") is occupied.

4. Vehicle (1) according to any of the previous claims,
**characterised in that** a roof impact sensor (4, 5) comprises a hermetically tight, compressible pressure tube (4.1, 5.1) and at least one pressure sensor (4.2, 4.3, 5.2, 5.3) configured to measure a pressure inside the pressure tube (4.1, 5.1), wherein the at least one pressure tube (4.1, 5.1) is arranged in a support structure supporting an impact sensing area of the roof (2) of the vehicle (1) such that the impact of an obstacle (7, 7', 7") within the impact sensing area at least partially compresses the pressure tube (4.1, 5.1).

5. Vehicle (1) according to any of the previous claims,
**characterised in that** a plurality of roof impact sensors (4, 5) are arranged such that a first roof impact sensor (4) detects an impact of an obstacle (7, 7', 7") within an impact sensing area that is at least partially non-overlapping the impact sensing area of a further roof impact sensor (5).

6. Vehicle (1) according to claim 5,
**characterised in that** a front-side roof impact sensor (4) comprises a pressure tube (4.1) arranged along the supporting structure of the front-side part of the roof (2), thereby embracing the roof (2) above a driver seat (3) and/or a front passenger seat (3') and that a rear-side roof impact sensor (5) comprises a pressure tube (5.1) arranged along the supporting structure of the rear-side part of the roof (2), thereby embracing the roof (2) above the at least one rear passenger seat (3") .

7. Method for operating a seat (3, 3', 3") of a vehicle (1) according to any of the previous claims, **characterised in that** an impact of an obstacle (7, 7', 7") onto the roof (2) of the vehicle (1) is detected and that upon such detection the seat (3, 3', 3") is moved from its regular position (P1) into its retracted position (P2).

8. Method according to claim 5,
**characterised in that** the seating (3.1) is lowered and/or the back rest (3.2) is inclined towards a more horizontal inclination when the seat (3) is moved from its regular position (P1) towards its retracted position (P2).

9. Method according to claim 5 or 6,
**characterised in that** the occupancy of a seat (3, 3', 3") is determined and that the seat (3, 3', 3") is moved into the retracted position (P2) only if it is occupied.

10. Method according to any of the previous claims,
**characterised in that** the impact of the obstacle (7, 7', 7") onto the roof (2) is localised and that the seat (3, 3', 3") is moved into the retracted position (P2) only if it is potentially affected by the impact.
